# EUROPÄISCHE PATENTSCHRIFT

(11) **EP 3 472 922 B1**
(45) Veröffentlichungstag und Bekanntmachung des Hinweises auf die Patenterteilung: **29.06.2022**
(21) Anmeldenummer: 17721167.9
(22) Anmeldetag: 04.05.2017
(51) Int. Cl.: H02K 1/28, H02K 17/16

(54) **ROTOR FÜR EINE ELEKTRISCHE ASYNCHRONMASCHINE MIT ANGEGOSSENEM KÄFIGLÄUFER, ELEKTRISCHE MASCHINE UND HERSTELLUNGSVERFAHREN**
ROTOR FOR AN ELECTRIC ASYNCHRONOUS MACHINE WITH A CAST CAGE ROTOR, ELECTRIC MACHINE, AND PRODUCTION METHOD
ROTOR POUR UNE MACHINE ASYNCHRONE ÉLECTRIQUE À CAGE D'ÉCUREUIL SURMOULÉE, MACHINE ÉLECTRIQUE ET PROCÉDÉ DE FABRICATION

(30) Priorität: 20.06.2016 DE 102016210993
(43) Veröffentlichungstag der Anmeldung: 24.04.2019
(73) Patentinhaber: Vitesco Technologies GmbH, 93055 Regensburg (DE)
(72) Erfinder: FRÖHLICH, Holger, 13127 Berlin (DE); FUKUMOTO, Isao, 14167 Berlin (DE)
(74) Vertreter: Vitesco Technologies
(86) Internationale Anmeldenummer: PCT/EP2017/060696
(87) Internationale Veröffentlichungsnummer: WO 2017/220239

(56) Entgegenhaltungen:
- CH-A5- 580 353
- CN-U- 205 070 663
- DE-A1-102012 110 157
- DE-U1-202011 110 583
- JP-A- H10 322 950
- RU-C1- 2 094 927
- US-A- 3 225 424
- US-A1- 2006 076 847

## Beschreibung

Die Erfindung betrifft einen Rotor für eine elektrische Asynchronmaschine. Der Rotor weist einen Käfigläufer auf, der in einem Blechpaket des Rotors angeordnete Stäbe sowie zwei an Stirnseiten des Blechpakets angeordnete und die Stäbe elektrisch verbindende Kurzschlussringe aufweist. Zu der Erfindung gehört auch eine elektrische Maschine, die den erfindungsgemäßen Rotor aufweist. Schließlich gehört zu der Erfindung auch ein Verfahren zum Herstellen des erfindungsgemäßen Rotors.

Bei einer elektrischen Maschine mit häufiger Drehzahländerung, wie zum Beispiel bei Fahrzeugantrieben, bestimmt die rotatorische und translatorische Masse der Elektromotoren den Energiebedarf und damit bei Einsatz in mobilen Umgebungen die Batteriegröße zum Versorgen der elektrischen Maschine. Hier besteht also die Notwendigkeit, die Masse des Rotors der elektrischen Maschine so gering wie möglich zu halten. Dennoch muss ein Außenumfang des Rotors eine gewisse Mindestgröße aufweisen, um ein ausreichendes Drehmoment erzeugen zu können. Dagegen sind die häufig verwendeten einteiligen Wellen zum Übertragen des Drehmoments in der Regel mit deutlich geringerem Durchmesser ausgestaltet. Zwar haben bei dieser Bauform die Wellen kein hohes Gewicht, allerdings muss entsprechend das Blechpaket des Rotors derart ausgestaltet sein, dass eine mechanische Verbindung zwischen dem Außenumfang des Rotors und der Welle hergestellt wird.

Um nicht ein massives Blechpaket auszugestalten, ist aus dem Stand der Technik bekannt, die Bleche des Blechpakets auszustanzen, so dass sich zum Beispiel die Form von Speichen ergibt, über welche die Welle mit dem magnetisch aktiven Teil des Rotors am Außenumfang verbunden ist. Der bekannte Ansatz zur Gewichtsreduzierung, nämlich Teilbereiche der inaktiven Blechzonen auszustanzen, führt allerdings nicht zu dem gewünschten Ergebnis, d.h. dass sich das Gewicht des Rotors durch den bekannten Ansatz nicht signifikant senken lässt.

Um einen Rotor für einen Asynchronmotor bereitzustellen, kann ein so genannter Käfigläufer vorgesehen sein, bei welchem elektrisch leitfähige Stäbe axial oder geschränkt im Blechpaket verlaufend angeordnet und an Stirnseiten des Blechpakets über einen jeweiligen Kurzschlussring aus elektrisch leitfähigem Material kurzgeschlossen sind. Hierbei ist bekannt, diesen Käfigläufer, d.h. die Stäbe und die Kurzschlussringe, als einen Gusskörper bereitzustellen, der an das Blechpaket angegossen ist. Man kann also das Blechpaket in einer Gussform anordnen und in der Gussform Hohlräume zum Einfüllen eines elektrisch leitfähigen Vergussmaterials, z.B. Aluminium bzw. eine Aluminium-Druckgusslegierung, vorsehen, sodass durch Ausgießen der Hohlräume der Käfigläufer an das Blechpaket angeformt oder angegossen wird.

Die CH 580 353 A5 beschreibt einen Rotor gemäß dem Oberbegriff des Patentanspruchs 1.

Die RU 2 094 927 C1, JP H10 322 950 A und CN 205 070 663 U beschreiben jeweils eine elektrische Asynchronmaschine, bei der in der Durchgangsöffnung des Käfigkäufers ein Vergussmaterial und eine Welle angeordnet sind.

Der Erfindung liegt die Aufgabe zugrunde, einen Rotor bereitzustellen, bei dem die Herstellungskosten reduziert werden können.

Die Aufgabe wird durch die Gegenstände der unabhängigen Patentansprüche 1 und 10 gelöst. Vorteilhafte Weiterbildungen der Erfindung sind durch die abhängigen Patentansprüche, die folgende Beschreibung sowie die Figuren beschrieben.

Durch die Erfindung ist ein Rotor für eine elektrische Asynchronmaschine bereitgestellt. In der beschriebenen Weise weist der Rotor einen Käfigläufer auf, der in einem Blechpaket des Rotors angeordnete Stäbe sowie zwei an Stirnseiten des Blechpakets angeordnete und die Stäbe elektrisch verbindende Kurzschlussringe aufweist. Der Käfigläufer ist als ein Gusskörper aus einem elektrisch leitfähigen Vergussmaterial an das Blechpaket angegossen. Das Vergussmaterial kann beispielsweise Aluminium oder eine Aluminiumlegierung sein. Insbesondere ist vorgesehen, dass das Vergussmaterial eine geringere spezifische Dichte als ein magnetisch leitfähiges Material des Blechpakets aufweist. Das magnetisch leitfähige Material des Blechpakets ist ein weichmagnetisches Material (Koerzitivfeldstärke < 1000 Ampere/Meter), zum Beispiel Eisen.

Erfindungsgemäß weist das Blechpaket mit dem weichmagnetischen Material eine sich axial durch das Blechpaket erstreckende Aussparung oder Durchgangsöffnung auf, d.h. eine Bohrung oder einen Schacht. Die axiale Richtung ist hierbei durch die bestimmungsgemäße Rotationsachse des Rotors definiert. Die Durchgangsöffnung ist insbesondere mittig in dem Blechpaket angeordnet, so dass das Blechpaket einen Ring oder Hohlzylinder darstellt, der um die Rotationsachse herum angeordnet ist. Die Durchgangsöffnung weist einen Durchmesser auf, der größer als ein Durchmesser einer Welle des Rotors ist. Es ist also eine mechanische Verbindung zwischen einer Innenwand der Durchgangsöffnung des Blechpakets einerseits und der Welle des Rotors andererseits nötig. Erfindungsgemäß ist hierzu in der Durchgangsöffnung ein aus dem besagten Vergussmaterial gebildeter und an das Blechpaket angegossener Füllkörper vorgesehen. Mit anderen Worten wird das Vergussmaterial nicht nur dazu genutzt, einen Käfigläufer als Gusskörper an das Blechpaket auszugießen, sondern auch den Zwischenraum zwischen der Welle einerseits und dem Blechpaket andererseits mit einem Füllkörper auszugießen oder zu füllen oder zu überbrücken. Die Durchgangsöffnung des Blechpakets ist also zumindest teilweise mit dem Füllkörper ausgefüllt. Die Durchgangsöffnung ist somit ein Aufnahmebereich.

Der erfindungsgemäße Rotor weist den Vorteil auf, dass die Verwendung des weichmagnetischen Materials des Blechpakets auf den magnetisch aktiven Teil reduziert werden kann, d.h. denjenigen Teil des Rotors, der zum Führen des magnetischen Wechselfelds des Stators nötig ist. Der übrige Teil des Rotors kann mit einem Vergussmaterial geringerer spezifischer Dichte (Masse pro Volumen), als sie das Blechpaket aufweist, hergestellt werden. Dies kann im selben Arbeitsschritt oder Herstellungsschritt erfolgen, wie das Herstellen des Käfigläufers selbst. Es muss lediglich eine entsprechende Gussform bereitgestellt sein, die zusätzlich zu den Hohlräumen für den Gusskörper des Käfigläufers auch einen Hohlraum zum Herstellen des Füllkörpers aufweist.

Zu der Erfindung gehören auch Weiterbildungen, durch deren Merkmale sich zusätzliche Vorteile ergeben.

Bei dem erfindungsgemäßen Rotor ist insbesondere vorgesehen, dass die Kurzschlussringe einerseits und der Füllkörper andererseits elektrisch voneinander getrennt sind. Hierdurch ergibt sich der Vorteil, dass der im Betrieb des Rotors erzeugte Kurzschlussstrom auf den Käfigläufer beschränkt bleibt und nicht über den Füllkörper geleitet wird und diesen zum Beispiel dadurch erwärmen könnte.

In einer Ausführungsform des Rotors, die nicht zur Erfindung gehört, kann vorgesehen sein, dass die Welle in den Füllkörper eingegossen ist. Die Welle kann zum Beispiel aus Stahl hergestellt sein, insbesondere einteilig ausgestaltet sein. Durch Eingießen der Welle ergibt sich der Vorteil, dass das Material der Welle unabhängig vom Vergussmaterial des Füllkörpers gewählt werden kann. Zudem kann ein axialer Formschluss mit dem Füllkörper bereitgestellt werden.

Bevorzugt ist vorgesehen, dass das Blechpaket im Bereich der Durchgangsöffnung, d.h. die Innenwand des Blechpakets, eine Keilnabe aufweist. Mit anderen Worten weist das Blechpaket im Bereich der Durchgangsöffnung Nuten und/oder sogar Hinterschnitte (für z.B. eine Schwalbenschwanzverbindung) auf. Es ergibt sich in die bestimmungsgemäße Drehrichtung des Rotors ein Formschluss zwischen Füllkörper und Blechpaket. Hierdurch ergibt sich der Vorteil, dass ein Drehmoment von dem Blechpaket auf den Füllkörper übertragen werden kann, ohne dass die Gefahr besteht, dass das Blechpaket zum Beispiel gegenüber dem Füllkörper in Umfangsrichtung verrutscht.

In einer Ausführungsform des Rotors, die nicht zur Erfindung gehört, kann vorgesehen sein, dass die Welle im Bereich des Füllkörpers einen unrunden Außenumfang aufweist. Insbesondere kann die Welle als Keilwelle ausgestaltet. Mit anderen Worten weist die Welle bevorzugt in axialer Richtung verlaufende Stege oder Nuten oder Rillen auf. Es ergibt sich ein Formschluss zwischen Welle und Füllkörper. Hierdurch ist eine zuverlässige Übertragung eines Drehmoments von dem Füllkörper hin zur Welle gewährleistet.

In einer Ausführungsform des Rotors, die nicht zur Erfindung gehört, kann vorgesehen sein, dass die Welle durchgängig ausgebildet ist. Es kann als Welle auch ein Wellenzapfen vorgesehen sein, d.h. die Welle erstreckt sich nicht vollständig durch das gesamte Blechpaket, sondern zum Beispiel nur bis weniger als die Hälfte oder weniger als ein Drittel der axialen Länge des Blechpakets. Die Welle ist dann als Wellenzapfen in eine Aufnahmeöffnung des Füllkörpers eingesteckt und zentriert und mit dem Füllkörper kraftschlüssig und/oder formschlüssig verbunden. Hierdurch ergibt sich der Vorteil, dass das Gewicht des Rotors weiter reduziert werden kann, da zum Beispiel eine Welle aus Stahl nicht entlang der gesamten Länge des Rotors vorhanden ist.

Der Füllkörper kann auch hohl ausgestaltet sein, sodass sich im Rotor Luft befindet. Mit anderen Worten weist der Rotor in dem Füllkörper einen luftgefüllten Hohlraum auf.

In dem Füllkörper kann auch ein Lagersitz für ein Lager des Rotors ausgestaltet sein. Sein solches Lager kann zum Beispiel ein Wälzlager sein. Mit einem Lager kann der Rotor rotatorisch bezüglich des Stators der elektrischen Maschine drehbar gelagert werden.

Anstatt die Welle als eigenes Bauteil in dem Rotor bereitzustellen, ist erfindungsgemäß vorgesehen, dass die Welle zusammen mit dem Füllkörper aus dem Vergussmaterial an das Blechpaket angegossen ist. Mit anderen Worten bilden die Welle und der Füllkörper im Inneren des Blechpakets eine stoffliche Einheit. Hierdurch ergibt sich der Vorteil, dass im selben Herstellungsschritt, in welchem der Käfigläufer und der Füllkörper hergestellt werden, auch die Welle hergestellt werden kann.

Erfindungsgemäß ist ein Wellenende der Welle als Steckkupplung aus dem Füllkörper gebildet. Sie weist also einen hohlen Innenbereich auf. Das Wellenende weist im Außenbereich oder im hohlen Innenbereich eine Geometrie auf, welche zur Momentenmitnahme geeignet ist.

In Bezug auf das Blechpaket sind ebenfalls mehrere vorteilhafte Weiterbildungen vorgesehen. Das Blechpaket weist die beschriebene Durchgangsöffnung auf, d.h. es formt einen Ring um die Welle oder den Füllkörper. Um die Blechschichten des Blechpakets herzustellen ist man daran interessiert, möglichst wenig Verschnitt eines Bleches zu erhalten. Dies geht nicht, wenn die Blechschichten als Ring ausgestaltet wären, dessen Innenbereich (das heißt die Durchgangsöffnung) ausgestanzt oder ausgeschnitten wird und somit Verschnitt darstellt. Bevorzugt ist deshalb in einer Ausführungsform vorgesehen, dass das Blechpaket in bekannter Weise mehrere (gegeneinander elektrisch isolierte) Blechschichten aufweist, von denen jede aber aus mehreren Ringsegmenten oder Blechsegmenten zusammengesetzt ist. Insbesondere ist vorgesehen dass diese Blechsegmente gleichförmig ausgestaltet sind. Somit lässt sich der besagte Ring aus zwei oder drei oder mehr als drei der Blechsegmente zusammensetzen.

Alternativ dazu kann vorgesehen sein, dass das Blechpaket aus zumindest einem spiralförmig gebogenen Blechstreifen gefertigt ist.

Zu der Erfindung gehört auch die elektrische Maschine mit einem Stator, in welchem eine Ausführungsform des erfindungsgemäßen Rotors drehbar gelagert ist. Die elektrische Maschine ist somit eine Asynchronmaschine. Bevorzugt ist vorgesehen, dass die elektrische Maschine als Generator für ein Kraftfahrzeug oder als Antriebsmotor oder als Starter für einen Verbrennungsmotor des Kraftfahrzeugs ausgestaltet ist.

Zu der Erfindung gehört schließlich auch das in Anspruch definierte Verfahren zum Herstellen des erfindungsgemäßen Rotors. Mittels des Verfahrens wird in der beschriebenen Weise an ein Blechpaket des Rotors ein Käfigläufer aus einem Vergussmaterial angegossen. Das Blechpaket weist dabei erfindungsgemäß eine sich axial durch das Blechpaket erstreckende Durchgangsöffnung auf, in welcher die Welle des Rotors anzuordnen ist. Beim Angießen des Käfigläufers wird zusätzlich in dieser Durchgangsöffnung aus dem Vergussmaterial ein Füllkörper an das Blechpaket angegossen. Hierdurch wird die Übertragung eines Drehmoments von dem Blechpakets hin zur Welle über den Füllkörper ermöglicht, der eine geringere spezifische Dichte als das Material des Blechpakets selber aufweisen kann. Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Rotors beschrieben worden sind. Aus diesem Grund sind die entsprechenden Weiterbildungen des erfindungsgemäßen Verfahrens hier nicht noch einmal beschrieben.

Im Folgenden sind Ausführungsbeispiele der Erfindung beschrieben. Hierzu zeigt:
- Fig. 1: eine schematische Darstellung einer Ausführungsform der erfindungsgemäßen elektrischen Maschine;
- Fig. 2: eine schematische Darstellung einer perspektivischen Ansicht eines Blechpakets mit Käfigläufer;
- Fig. 3: eine schematische Darstellung einer perspektivischen Ansicht eines Rotors, der auf dem Blechpakets von Fig. 2 basieren kann;
- Fig. 4: eine schematische Darstellung eines Längsschnitts des Rotors von Fig. 3;
- Fig. 5: eine schematische Darstellung einer perspektivischen Ansicht einer Welle, die in dem Rotor von Fig. 3 angeordnet sein kann;
- Fig. 6: eine alternative Ausgestaltung der Welle des Rotors von Fig. 3;
- Fig. 7: eine schematische Darstellung eines Querschnitts des Rotors von Fig. 3;
- Fig. 8: Beispiele für mögliche Ausgestaltungen eines Füllkörpers, der in dem Rotor von Fig. 3 bereitgestellt sein kann;
- Fig. 9: eine schematische Darstellung eines Längsschnitts einer alternativen Ausgestaltung des Rotors von Fig. 3 mit Wellenzapfen;
- Fig. 10: eine schematische Darstellung einer Blechschicht des Rotors von Fig. 3 mit segmentiertem Aufbau; und
- Fig. 11: eine schematische Darstellung einer perspektivischen Ansicht einer alternativen Ausgestaltung des Blechpakets mit spiralförmigen Blechstreifen.

Bei dem im Folgenden erläuterten jeweiligen Ausführungsbeispiel handelt es sich um eine bevorzugte Ausführungsform der Erfindung.

In den Figuren sind funktionsgleiche Elemente jeweils mit denselben Bezugszeichen versehen.

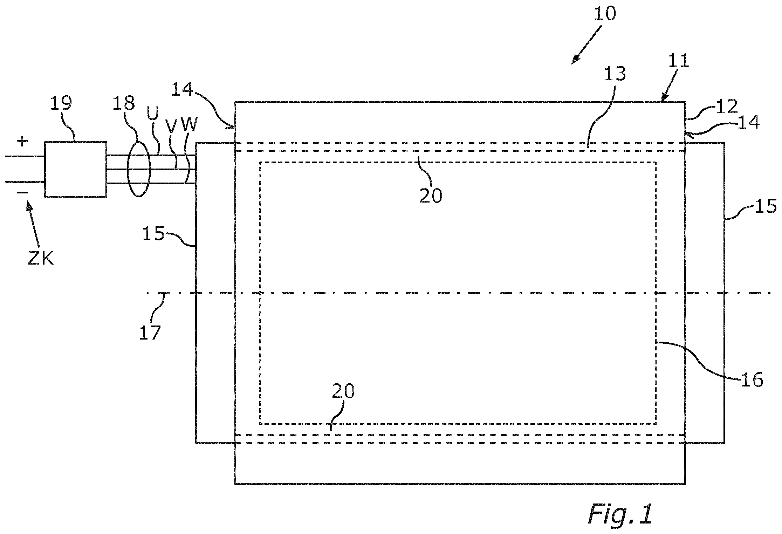

Fig. 1 zeigt eine elektrische Maschine 10, bei der es sich um eine Asynchronmaschine handelt. Die elektrische Maschine 10 kann einen Stator 11 mit einem Blechpaket 12 und darin angeordneten elektrischen Wicklungen 13 in an sich bekannter Weise aufweisen. Die Wicklungen 13 ragen an Stirnseiten 14 des Blechpakets 12 aus diesem heraus und bilden dort Wicklungsköpfe 15. In dem Stator 11 ist ein Rotor 16 angeordnet, der um eine Rotationsachse 17 drehbar gelagert ist. Die elektrischen Wicklungen 13 des Stators 11 können über elektrische Leitungselemente oder Phasenleiter 18 abwechselnd mit elektrischem Strom aus einer Spannungsquelle 19 bestromt werden, wodurch in einem Luftspalt 20 zwischen dem Stator 11 und dem Rotor 16 ein magnetisches Drehfeld erzeugt wird, durch welches der Rotor 16 um die Rotationsachse 17 gedreht wird. Durch die Phasenleiter 18 können elektrische Phasen U, V, W bereitgestellt sein. Die Spannungsquelle 19 kann zum Beispiel ein Stromrichter oder Wechselrichter sein, welcher z.B. an einen Gleichspannungs-Zwischenkreises ZK angeschlossen sein und den Strom in den Phasenleitern 18 erzeugen kann.

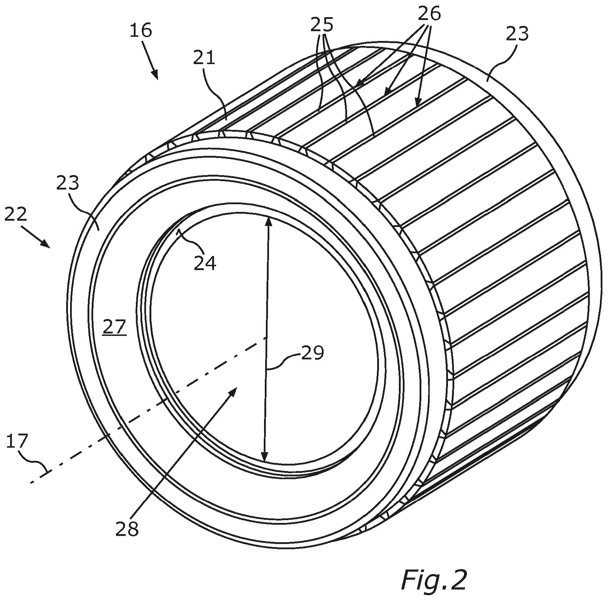

Fig. 2 zeigt von dem Rotor 16 ein Blechpaket 21 und einen daran angeordneten Käfigläufer 22, von dem in der Fig. 2 Kurzschlussringe 23 an einer jeweiligen Stirnseite 24 des Blechpakets 21 angeordnet sind. Stäbe 25 des Käfigläufers 22 können zum Beispiel in Nuten 26 des Blechpakets 21 angeordnet sein. Von den Stäben 25 und den Nuten 26 sind in Fig. 2 der Übersichtlichkeit halber nur einige mit einem Bezugszeichen versehen. Die Stäbe 25 und die Kurzschlussringe 23 sind an das Blechpaket 21 durch ein Gussverfahren (wie z.B. Aluminiumdruckguss) angegossen worden. Der so gebildete Käfigläufer 22 für das Blechpaket 21 ist somit aus einem Vergussmaterial 27 gebildet, bei dem es sich zum Beispiel um Aluminium oder eine Aluminiumlegierung handeln kann.

Das Blechpaket 21 weist im Bereich der Rotationsachse 17 eine Durchgangsöffnung 28 auf, die eine einen Durchmesser 29 aufweist, der größer ist, als er für eine Welle des Rotors 16 vorgesehen ist.

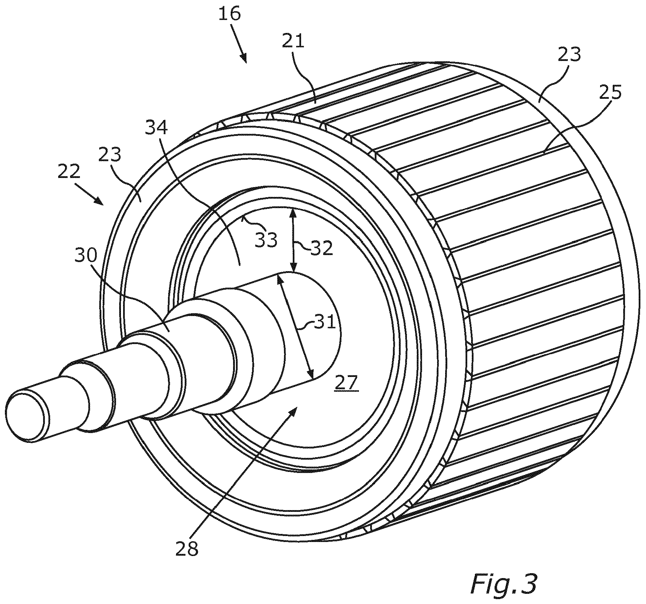

Fig. 3 zeigt zur Veranschaulichung den Rotor 16 mit einer Welle 30, deren Durchmesser 31 kleiner als der Durchmesser 29 der Durchgangsöffnung 28 ist. Ein Zwischenraum 32 zwischen der Welle 30 und einer Innenwand 33 der Durchgangsöffnung 28 ist mit einem Füllkörper 34 ausgefüllt, der ebenfalls aus dem Vergussmaterial 27 gebildet ist. Die Kurzschlussringe 23 einerseits und der Füllkörper 34 andererseits sind dabei elektrisch gegeneinander isoliert. Insbesondere beträgt ein zwischen ihnen wirksamer ohmscher Widerstand mehr als 10 Kiloohm.

Insgesamt ist die Welle hier als Einlegeteil formschlüssig in dem Füllkörper 34 eingeschlossen. Der Füllkörper 34 kann zum Beispiel mittels eines Aluminium-Druckgussverfahrens hergestellt werden.

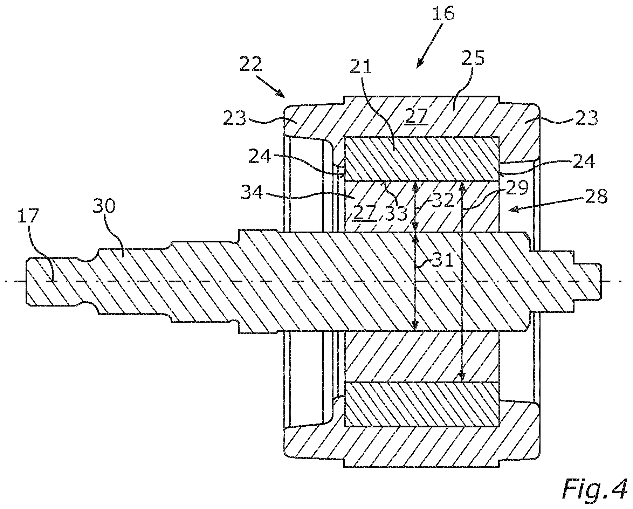

Fig. 4 veranschaulicht den Rotor 16 im Längsschnitt. Die Welle 30 kann in den Füllkörper 34 eingegossen sein. Somit ist die Durchgangsöffnung 28 ein Aufnahmebereich für die Welle 30 den Füllkörper 34. Die Welle 30 kann zum Beispiel beim Herstellen des Käfigläufers 22 zusammen mit dem Blechpaket 21 in einer Gussform eingelegt worden sein und anschließend das Vergussmaterial 27 in die Gussform eingegossen oder eingespritzt worden sein, sodass sich der Käfigläufer 22 mit den Kurzschlussringen 23 und den Stäben 25 einerseits und der Füllkörper 34 andererseits gebildet hat.

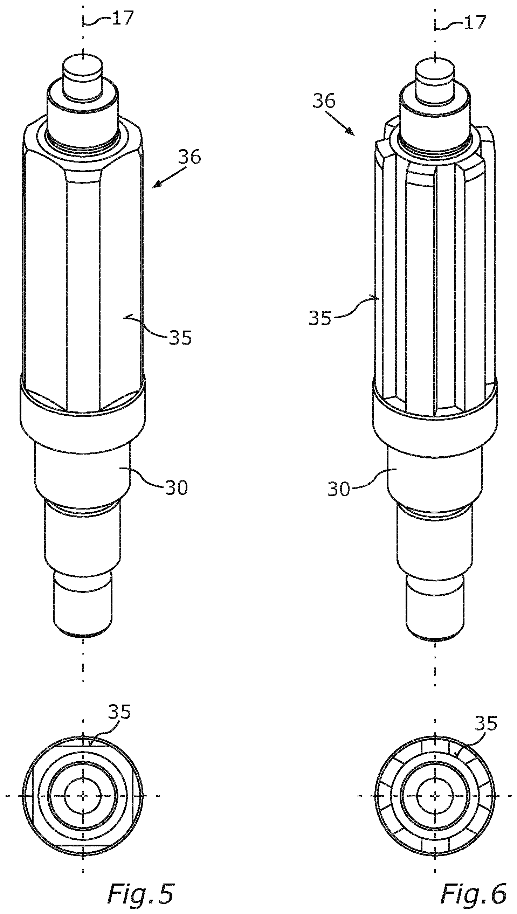

Fig. 5 und Fig. 6 veranschaulichen, wie eine Übertragung eines Drehmoments zwischen dem Füllkörper 34 und der Welle 30 sichergestellt werden kann. Bei der Welle 30 kann im Bereich des Füllkörpers 34, d.h. im Bereich der Durchgangsöffnung 28, ein Außenumfang 35 unrund ausgestaltet sein, zum Beispiel in der dargestellten Form als Keilwelle 36. Hierdurch ergibt sich ein Formschluss zwischen dem in der Form korrespondierenden Füllkörper 34 und der Welle 30 in Bezug auf eine Übertragung eines Drehmoments zwischen Welle 30 und Füllkörper 34.

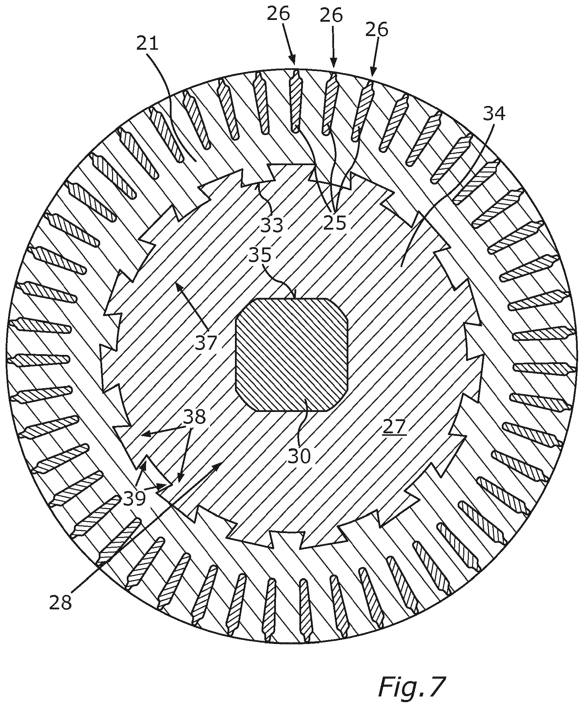

Fig. 7 veranschaulicht zusätzlich, wie auch eine Welle-Nabe-Verbindung zwischen dem Füllkörper 34 und der Innenwand 33 des Blechpakets 21 zum Übertragen eines Drehmoments eine Keilnabe 37 bereitgestellt werden kann. Hierzu kann in der Innenwand 33 eine Anordnung aus Nuten 38 im Blechpaket 21 bereitgestellt sein. Von den Nuten 38 ist in Fig. 7 der Übersichtlichkeit halber nur ein Teil mit Bezugszeichen versehen. Beim Anordnen des Vergussmaterials 27 in der Durchgangsöffnung 28 werden die Nuten 38 mit dem Vergussmaterials 27 gefüllt, wodurch sich zwischen Füllkörper 34 und Blechpaket 21 in der Form korrespondierend zu den Nuten 38 ein Formschluss ausbildet.

In Fig. 7 ist auch gezeigt, wie durch Nuten 38 mit Hinterschnitten 39 eine Schwalbenschwanzverbindung zwischen dem Füllkörper 34 und dem Blechpakets 21 gebildet werden kann. Dies verbessert die Übertragung von Fliehkräften entlang einer radialen Richtung senkrecht zur Rotationsachse 17. Insbesondere bei segmentiertem Aufbau des Blechpakets 21 stabilisiert dies den Zusammenhalt des Blechpakets 21.

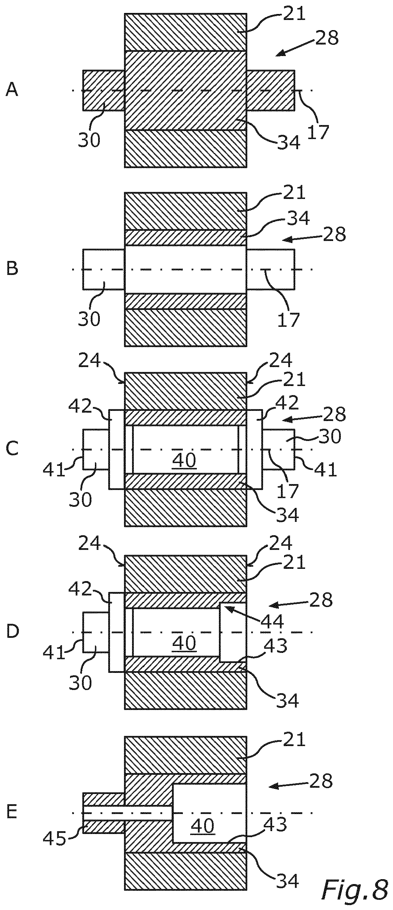

Fig. 8 zeigt unterschiedliche, mögliche Varianten A bis E, wovon Variante E die erfindungsgemäße Variante verauschlicht, wie in dem Blechpakets 21 mittels des Füllkörpers 34 in der Durchgangsöffnung 28 eine mechanische Kopplung des Blechpakets 21 mit der Welle 30 erreicht werden kann. In Fig. 8 sind die Komponenten des Käfigläufers 22 der Übersichtlichkeit halber nicht dargestellt. Die mechanische Kopplung beruht auf dem Vergussmaterial 27, das eine geringere spezifische Dichte als das magnetisch leitfähige Material des Blechpakets 21 selbst aufweist.

In der beispielhaften, nicht beanspruchten Variante A ist eine Integration der Welle 30 zur Momentenübertragung vorgesehen, d.h. auch die Welle 30 selbst ist aus dem Vergussmaterial 27 durch Angießen an das Blechpaket 21 gebildet.

In der beispielhaften, nicht beanspruchten Variante B ist die Welle 30 als separates, einstückiges Bauteil, zum Beispiel aus Stahl, in den Füllkörper 34 eingegossen, sodass die Welle 30 über eine Welle-Nabe-Verbindung als Einlegeteil formschlüssig mit dem Füllkörper 34 verbunden ist, wie dies zum Beispiel in Fig. 5 und Fig. 6 und Fig. 7 veranschaulicht ist.

In der beispielhaften, nicht beanspruchten Variante C kann der Füllkörper 34 einen Hohlraum 40 aufweisen. Der Füllkörper 34 kann an den Stirnseiten 24 Wellenzapfen 41 aufnehmen, welche die Welle 30 darstellen. Die Wellenzapfen 41 können Endscheiben 42 aufweisen, durch welche eine zuverlässige Positionierung und Zentrierung der Wellenzapfen 41 bezüglich der Rotationsachse 17 im Füllkörper 34 gewährleistet ist.

In der beispielhaften, nicht beanspruchten Variante D ist ein Wellenzapfen 41 mit Endscheibe 42 an einer Stirnseite 24 des Blechpakets 21 angeordnet. An der anderen Stirnseite 24 kann ein Lagersitz 43 zum Anordnen eines Lagers ausgestaltet sein, der beispielsweise einen Anschlag 44 zum Definieren einer Solllage des Lagers aufweisen kann.

In der Variante E ist der Füllkörper 34 als Steckkupplung 45 ausgestaltet, der auf eine weitere Welle (nicht dargestellt) aufgesteckt werden kann. Auf der gegenüberliegenden Seite kann in der beschriebenen Weise ein Lagersitz 43 ausgestaltet sein.

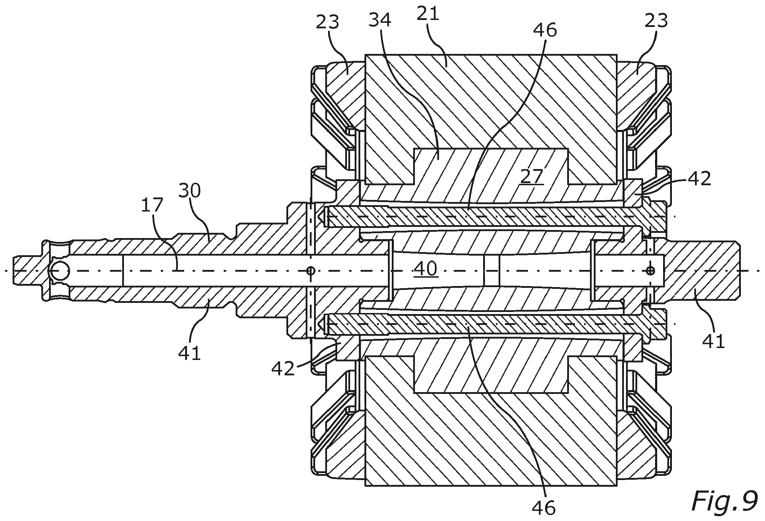

Fig. 9 veranschaulicht im Längsschnitt die Variante C mit Wellenzapfen 41, deren Endscheiben 42 an den Füllkörper 34 angeordnet und zentriert sind. Mittels Zugankern 46 können die beiden Wellenzapfen 41 miteinander verbunden sein.

Fig. 9 zeigt zusätzlich, wie der Durchmesser 29 des Füllkörpers 34 im Inneren des Blechpakets 21 größer sein kann als an den Stirnseiten 24 des Blechpakets 21. Hierdurch wird das Blechpaket 21 auch in axialer Richtung durch den Füllkörper 34 mittels eines Formschlusses auf der Welle 30 gehalten.

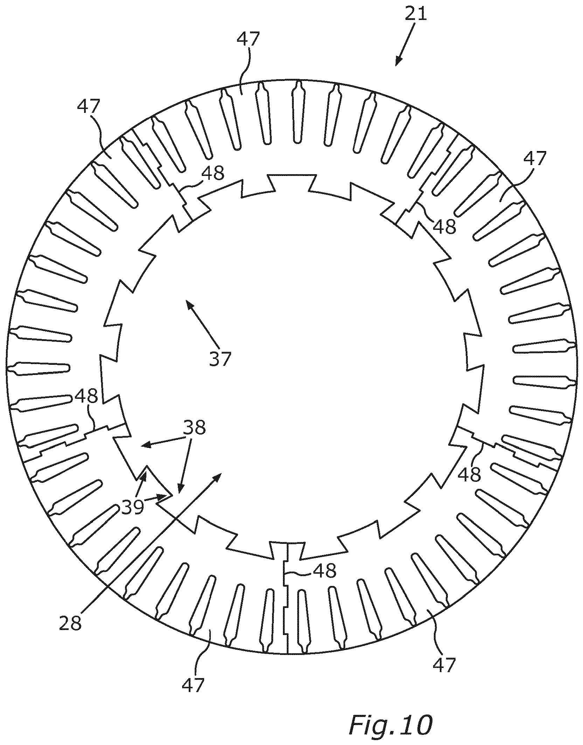

Fig. 10 veranschaulicht, wie das Blechpaket 21 aus Ringsegmenten oder Blechsegmenten oder kurz Segmenten 47 gebildet sein kann, welche jeweils einen Kreisabschnitt oder Kreissektors des durch das Blechpaket 21 gebildeten Ringes bilden. Verbindungsstellen 48 der Segmente 47 sind in Fig. 10 durch Trennlinien veranschaulicht. Insbesondere kann vorgesehen sein, dass die Segmente 47 gleichförmig sind, d.h. die gleiche Form aufweisen und z.B. auf der Grundlage ein und derselben Stanzform gebildet sind. Durch die beschriebenen Hinterschnitte 39 in den Nuten 38 zum Ausbilden der Keilnabe 37 mit Schwalbenschwanzverbindungen können die einzelnen Segmente 47 durch den Füllkörper 34 gegen Zentrifugalkräfte gehalten sein.

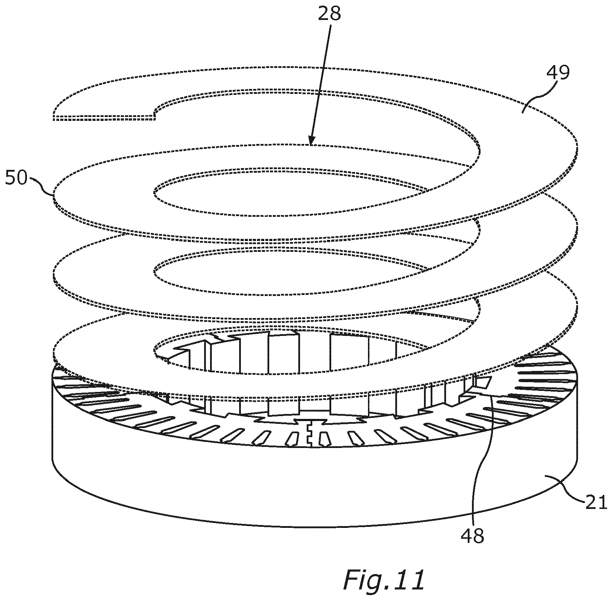

Alternativ zu einem segmentweisen Aufbau ist in Fig. 11 veranschaulicht, wie mittels eines Blechstreifens 49 aus Blech eine Blechpaketspirale 50 erzeugt werden kann, um aus dieser das Blechpaket 21 zu bilden. Es können mehrere Blechstreifen 49 nacheinander gestapelt werden, wodurch wieder die Verbindungsstellen 48 entstehen.

Indem der Blechstreifen 49 spiralförmig gewunden wird, können beim Biegen unvermeidbare Verbeulungen oder Aufwerfungen des Blechstreifens 49 durch Pressen des Blechpakets 21 oder durch Pressen eines zwischenzeitlich gebildeten Teilpakets in Richtung der Rotationsachse ausgeglichen werden.

Die beschriebenen Ausführungsformen des Rotors 16 weisen den gemeinsamen Vorteil auf, dass sich ein geringes rotatorisches Massenträgheitsmoment ergibt als bei einem massiv aus dem Material des Blechpakets gebildeten Rotor. Das rotatorische Massenträgheitsmoment des Rotors 16 ist bei dieser Bauweise um mehr als 5 Prozent geringer als bei dem bekannten Ansatz zur Gewichtsreduzierung, bei dem Teilbereiche der inaktiven Blechzonen ausgestanzt werden. Dieses geringere Gewicht ist insbesondere in Bezug auf die Antriebs-Effizienz wünschenswert, da es sich um ein rotierendes Bauteil handelt.

Die Herstellung der Welle-Nabe-Verbindung zwischen Blechpaket 21 und Füllkörper 34 sowie zwischen Füllkörper 34 und Welle 30 kann in einem Arbeitsgang mit dem Anguss der Kurzschlussringe 23 und der Stäbe 25 erfolgen.

Insgesamt zeigt das Beispiel, wie durch die Erfindung ein kostenoptimierter Leichtbaurotor für einen Asynchronmotor bereitgestellt werden kann.

### Bezugszeichenliste

- 10: Elektrische Maschine
- 11: Stator
- 12: Blechpaket
- 13: Wicklungen
- 14: Stirnseite Stator
- 15: Wicklungsköpfe
- 16: Rotor
- 17: Rotationsachse
- 18: Phasenleiter
- 19: Spannungsquelle
- 20: Luftspalt
- 21: Blechpaket
- 22: Käfigläufer
- 23: Kurzschlussringe
- 24: Stirnseite Blechpaket
- 25: Stäbe
- 26: Nuten
- 27: Vergussmaterial
- 28: Durchgangsöffnung
- 29: Durchmesser
- 30: Welle
- 31: Durchmesser
- 32: Zwischenraum
- 33: Innenwand
- 34: Füllkörper
- 35: Außenumfang
- 36: Keilwelle
- 37: Keilnabe
- 38: Nuten
- 39: Hinterschnitt
- 40: Hohlraum
- 41: Wellenzapfen
- 42: Endscheibe
- 43: Lagersitz
- 44: Anschlag
- 45: Steckkupplung
- 46: Zuganker
- 47: Segmente
- 48: Verbindungsstellen
- 49: Blechstreifen
- 50: Spirale
- ZK: Zwischenkreis

## Patentansprüche

1. Rotor (16) für eine elektrische Asynchronmaschine (10), mit einem Käfigläufer (22), der in einem Blechpaket (21) des Rotors (16) angeordnete Stäbe (25) und zwei an Stirnseiten (24) des Blechpakets (21) angeordnete und die Stäbe (25) elektrisch verbindende Kurzschlussringe (23) aufweist, wobei der Käfigläufer (22) als ein Gusskörper aus einem elektrisch leitfähigen Vergussmaterial (27) an das Blechpaket (21) angegossen ist, das Blechpaket (21) eine sich axial durch das Blechpaket (21) erstreckende Durchgangsöffnung (28) aufweist, die einen Durchmesser (29) größer als ein Durchmesser (31) einer Welle (30) des Rotors (16) aufweist, und dass in der Durchgangsöffnung (28) ein aus dem Vergussmaterial (27) gebildeter und an das Blechpaket (21) angegossener Füllkörper (34) angeordnet ist, wobei die Welle (30) zusammen mit dem Füllkörper (34) aus dem Vergussmaterial (27) an das Blechpaket (21) angegossen ist, **dadurch gekennzeichnet , dass** die Welle (30) als Stecckupplung (45) aus dem Füllkörper (34) gebildet ist.

2. Rotor (16) nach Anspruch 1, wobei das Vergussmaterial (27) eine geringere spezifische Dichte aufweist als ein Material des Blechpakets (21).

3. Rotor (16) nach einem der vorhergehenden Ansprüche, wobei die Kurzschlussringe (23) und der Füllkörper (34) elektrisch voneinander getrennt sind.

4. Rotor (16) nach einem der vorhergehenden Ansprüche, wobei das Blechpaket (21) im Bereich der Durchgangsöffnung (28) eine Keilnabe (37) aufweist.

5. Rotor (16) nach einem der vorhergehenden Ansprüche, wobei in dem Füllkörper (34) ein Lagersitz (43) für ein Lager des Rotors (16) ausgestaltet ist.

6. Rotor (16) nach einem der vorhergehenden Ansprüche, wobei der Füllkörper (34) einen luftgefüllten Hohlraum (40) aufweist.

7. Rotor (16) nach einem der vorhergehenden Ansprüche, wobei das Blechpaket (21) mehrere gegeneinander isolierte Blechschichten aufweist, von denen jede aus mehreren Blechsegmenten (47) zusammengesetzt ist.

8. Rotor (16) nach einem der Ansprüche 1 bis 6, wobei das Blechpaket (21) aus zumindest einem spiralförmig gebogenen Blechstreifen (49) gefertigt ist.

9. Elektrische Maschine (10) mit einem Stator (11), in welchem ein Rotor (16) drehbar gelagert ist, **dadurch ge** - **kennzeichnet**, dass der Rotor (16) gemäß einem der vorhergehenden Ansprüche ausgestaltet ist.

10. Verfahren zum Herstellen eines Rotors (16) nach einem der Ansprüche 1 bis 8, wobei an ein Blechpaket (21) ein Käfigläufer (22) aus einem Vergussmaterial (27) angegossen wird, wobei das Blechpaket (21) eine sich axial durch das Blechpaket (21) erstreckende Durchgangsöffnung (28) aufweist und beim Angießen des Käfigläufers (22) zusätzlich in der Durchgangsöffnung (28) aus dem Vergussmaterial (27) ein Füllkörper (34) an das Blechpaket (21) angegossen wird, und eine Welle 30 zusammen mit dem Füllkörper (34) aus dem Vergussmaterial (27) an das Blechpaket (21) angegossen wird, **dadurch gekennzeichnet, dass** die Welle (30) als Steckkupplung (45) aus dem Füllkörper (34) gebildet wird.

## Claims

1. Rotor (16) for an electrical asynchronous machine (10), comprising a squirrel-cage rotor (22) which has bars (25) which are arranged in a laminated core (21) of the rotor (16) and two short-circuiting rings (23) which are arranged at end sides (24) of the laminated core (21) and electrically connect the bars (25), wherein the squirrel-cage rotor (22) is cast onto the laminated core (21) as a casting composed of an electrically conductive casting material (27), the laminated core (21) having a passage opening (28) which extends axially through the laminated core (21) and has a diameter (29) which is larger than a diameter (31) of a shaft (30) of the rotor (16), and in that a filler (34) which is formed from the casting material (27) and is cast onto the laminated core (21) is arranged in the passage opening (28), wherein the shaft (30) is cast onto the laminated core (21) together with the filler (34) composed of the casting material (27), **characterized in that** the shaft (30) is formed as a plug-in coupling (45) from the filler (34).

2. Rotor (16) according to Claim 1, wherein the casting material (27) has a lower specific density than a material of the laminated core (21).

3. Rotor (16) according to either of the preceding claims, wherein the short-circuiting ring (23) and the filler body (34) are electrically isolated from one another.

4. Rotor (16) according to one of the preceding claims, wherein the laminated core (21) has a spline hub (37) in the region of the passage opening (28).

5. Rotor (16) according to one of the preceding claims, wherein a bearing seat (43) for a bearing of the rotor (16) is formed in the filler (34).

6. Rotor (16) according to one of the preceding claims, wherein the filler (34) has an air-filled cavity (40).

7. Rotor (16) according to one of the preceding claims, wherein the laminated core (21) has a plurality of lamination layers which are insulated from one another and each of which is composed of several lamination segments (47).

8. Rotor (16) according to one of Claims 1 to 6, wherein the laminated core (21) is manufactured from at least one lamination strip (49) bent into a helix.

9. Electrical machine (10) having a stator (11) in which a rotor (16) is rotatably mounted, **characterized in that** the rotor (16) is designed according to one of the preceding claims.

10. Method for producing a rotor (16) according to one of Claims 1 to 8, wherein a squirrel-cage rotor (22) composed of a casting material (27) is cast onto a laminated core (21), wherein the laminated core (21) has a passage opening (28) which extends axially through the laminated core (21) and, when the squirrel-cage rotor (22) is cast on, a filler (34) is additionally cast onto the laminated core (21) in the passage opening (28) made in the casting material (27), and a shaft (30) is cast onto the laminated core (21) together with the filler (34) composed of the casting material (27), **characterized in that** the shaft (30) is formed as a plug-in coupling (45) from the filler (34).

## Revendications

1. Rotor (16) pour une machine asynchrone électrique (10), comprenant une cage d'écureuil (22) qui présente des tiges (25) disposées dans un paquet de tôles (21) du rotor (16) et deux bagues de court-circuit (23) disposées sur les faces frontales (24) du paquet de tôles (21) et reliant électriquement les tiges (25), dans lequel la cage d'écureuil (22) est surmoulée sur le paquet de tôles (21) sous la forme d'un corps moulé d'un matériau d'enrobage (27) électriquement conducteur, le paquet de tôles (21) présente une ouverture de passage (28) s'étendant axialement à travers le paquet de tôles (21) et qui présente un diamètre (29) supérieur à un diamètre (31) d'un arbre (30) du rotor (16), et dans l'ouverture de passage (28) est disposé un corps de remplissage (34) formé du matériau de moulage (27) et surmoulé sur le paquet de tôles (21), l'arbre (30) étant surmoulé sur le paquet de tôles (21) avec le corps de remplissage (34) du matériau de moulage (27),
**caractérisé en ce que** l'arbre (30) est formé à partir du corps de remplissage (34) sous la forme d'un raccord à enfichage (45).

2. Rotor (16) selon la revendication 1, dans lequel le matériau de moulage (27) présente une densité spécifique inférieure à un matériau du paquet de tôles (21) .

3. Rotor (16) selon l'une quelconque des revendications précédentes, dans lequel les bagues de court-circuit (23) et le corps de remplissage (34) sont électriquement séparés les unes par rapport à l'autre.

4. Rotor (16) selon l'une quelconque des revendications précédentes, dans lequel le paquet de tôles (21) présente un moyeu cannelé (37) au niveau de l'ouverture de passage (28).

5. Rotor (16) selon l'une quelconque des revendications précédentes, dans lequel un siège de palier (43) pour un palier du rotor (16) est configuré dans le corps de remplissage (34).

6. Rotor (16) selon l'une quelconque des revendications précédentes, dans lequel le corps de remplissage (34) présente une cavité remplie d'air (40) .

7. Rotor (16) selon l'une quelconque des revendications précédentes, dans lequel le paquet de tôles (21) présente plusieurs couches de tôle isolées les unes par rapport aux autres, dont chacune est composée de plusieurs segments de tôle (47).

8. Rotor (16) selon l'une quelconque des revendications 1 à 6, dans lequel le paquet de tôles (21) est fabriqué à partir d'au moins un ruban de tôle (49) plié en forme de spirale.

9. Machine électrique (10) comprenant un stator (11) dans lequel un rotor (16) est monté en rotation, **caractérisée en ce que** le rotor (16) est configuré selon l'une quelconque des revendications précédentes.

10. Procédé de fabrication d'un rotor (16) selon l'une quelconque des revendications 1 à 8, dans lequel une cage d'écureuil (22) d'un matériau de moulage (27) est surmoulée sur un paquet de tôles (21), dans lequel le paquet de tôles (21) présente une ouverture de passage (28) s'étendant axialement à travers le paquet de tôles (21), et lors du surmoulage de la cage d'écureuil (22), un corps de remplissage (34) est surmoulé sur le paquet de tôles (21) en plus dans l'ouverture de passage (28) à partir du matériau de moulage (27), et un arbre (30) est surmoulé avec le corps de remplissage (34) sur le paquet de tôles (21) à partir du matériau de moulage (27), **caractérisé en ce que** l'arbre (30) est formé à partir du corps de remplissage (34) sous la forme d'un raccord à enfichage (45).
